# EUROPÄISCHE PATENTSCHRIFT

(11) **EP 1 114 756 B1**
(45) Veröffentlichungstag und Bekanntmachung des Hinweises auf die Patenterteilung: **26.07.2006**
(21) Anmeldenummer: 00127110.5
(22) Anmeldetag: 11.12.2000
(51) Int. Cl.: B60R 21/01

(54) **System zum Steuern der Auslösung eines Insassenschutzmittels, insbesondere eines Airbags**
Control device for triggering a restraint system, especially for air bags
Dispositif de commande pour déclencher un dispositif de retenue, notamment pour des coussins gonflables

(30) Priorität: 04.01.2000 DE 10000113
(43) Veröffentlichungstag der Anmeldung: 11.07.2001
(73) Patentinhaber: SIEMENS AKTIENGESELLSCHAFT, 80333 München (DE)
(72) Erfinder: Hamperl, Reinhard, 93096 Köfering (DE); Mader, Gerhard, Dr., 93107 Thalmassing (DE); Rösl, Reinhard, 93173 Wenzenbach (DE); Roth, Christoph, Dr., Shinagawa-ku, Tokyo 141-8641 (JP)

(56) Entgegenhaltungen:
- EP-A- 1 031 477
- WO-A-97/06990
- DE-A- 19 752 145

## Beschreibung

Die Erfindung betrifft ein System zum Steuern der Auslösung eines Insassenschutzmittels, insbesondere eines Airbags.

Insassenschutzsysteme, die beispielsweise pyrotechnisch ausgelöst werden, haben in Kraftfahrzeugen weitgehende Verbreitung gefunden. Ein Problem, das sich bei solchen Insassenschutzmitteln, insbesondere Airbags, stellt, liegt darin, daß die Auslösung und der Aufblasvorgang des Airbags auf den Abstand der zu schützenden Person vom Airbag und ds Vorhandensein anderer Objekte, beispielsweise eines Kindersitzes, abgestimmt sein muß. Befindet sich eine Person in einem Pkw beispielsweise in unmittelbarer Nähe einer Öffnung, aus der heraus der Airbag aufgeblasen wird, so kann eine Auslösung zu Verletzungen der Person führen. Solche Situationen sind beispielsweise gegeben, wenn sich ein Kind vor dem Beifahrersitz befindet oder eine Person mit langen Beinen in einem kleinen Auto auf dem Beifahrersitz sitzt und die Knie direkt vor dem sich entfaltenden Airbag befinden.

Um das Auslösen und/oder die Entfaltung des Airbags auf die jeweiligen Belegungsverhältnisse in dem dem Airbag zugewandten Raum abzustimmen, kann die Entfernung einer Person oder eines Objektes im Fahrzeuginnenraum von der Schalttafel gemessen oder die Position der Person anderweitig erkannt werden, so daß festgestellt werden kann, ob der Airbag überhaupt ausgelöst werden soll oder ob er mit verminderter Geschwindigkeit aufgeblasen werden soll. Zur Positionserkennung kann beispielsweise die Wärmestrahlung des menschlichen Körpers ausgenutzt werden. Weiter kann beispielsweise durch Arbeiten mit Infrarotstrahlung über Triangulation oder andere Verfahren die Position einer Person gemessen werden. Dabei werden verschiedene Infrarotstrahlen in den zu überwachenden Raum abgestrahlt und die von einem Objekt in dem überwachten Raum, beispielsweise einer Person, reflektierte oder gestreute Strahlung wird ausgewertet. Die nachveröffentlichte EP-A-1 031 477 zeigt ein System zur Steuerung der Auslösung eines Insassenschutzmittels, bei dem in Abhängigkeit von der von einem Sensorelement aufgenommenen Strahlungsleistung die Sendeleistung verändert wird.

Der Erfindung liegt die Aufgabe zugrunde, ein System zum Steuern der Auslösung eines Insassenschutzmittels, insbesondere eines Airbags, in Abhängigkeit von der Belegung eines dem Insassenschutzmittel zugeordneten Raums zu schaffen, das bei hoher Betriebssicherheit eine ausreichend genaue Positionsbestimmung eines in dem Raum befindlichen Objekts ermöglicht.

Diese Aufgabe wird mit einem System gemäß dem Hauptanspruch gelöst.

Bei dem erfindungsgemäßen System werden die einzelnen Sensorelemente im Hinblick auf Plausibilität ihrer Ausgangssignale überprüft und bei der Positionsbestimmung nur berücksichtigt, wenn die Ausgangssignale innerhalb vorgebbarer, plausibler Bereiche liegen.

Die Unteransprüche sind auf vorteilhafte Ausführungsformen und Weiterbildungen des erfindungsgemäßen Systems gerichtet.

Die Erfindung kann überall dort vorteilhaft eingesetzt werden, wo die Auslösung eines Insassenschutzmittels von Positionen von Objekten abhängt.

Die Erfindung wird im Folgenden anhand schematischer Zeichnungen beispielsweise und mit weiteren Einzelheiten erläutert.

Es stellen dar:
Fig. 1 eine perspektivische Ansicht eines Fahrzeuginnenraums durch eine geöffnete Beifahrertüre,
Fig. 2 eine Untenansicht einer in dem Fahrzeug angeordneten Sende-/Empfangseinrichtung,
Fig. 3 eine schematische Ansicht von Strahlenverläufen zur Erläuterung der Funktionsweise vorteilhafterweise verwendeter Sensorelemente, und
Fig. 4 ein Blockschaltbild des erfindungsgemäßen Systems.

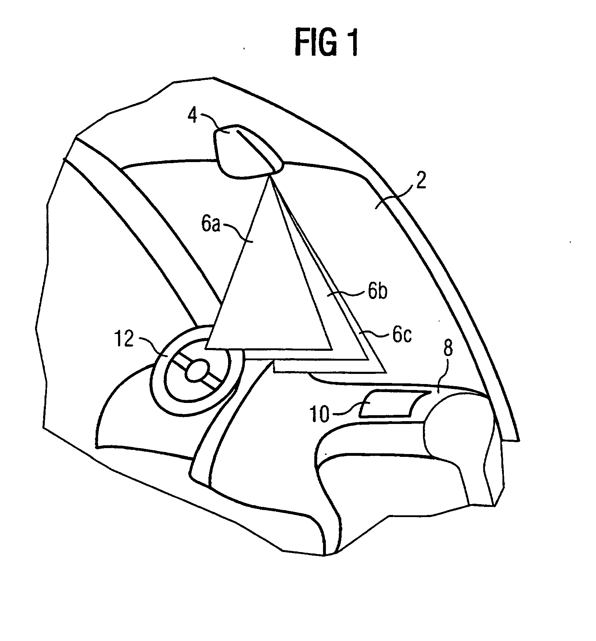

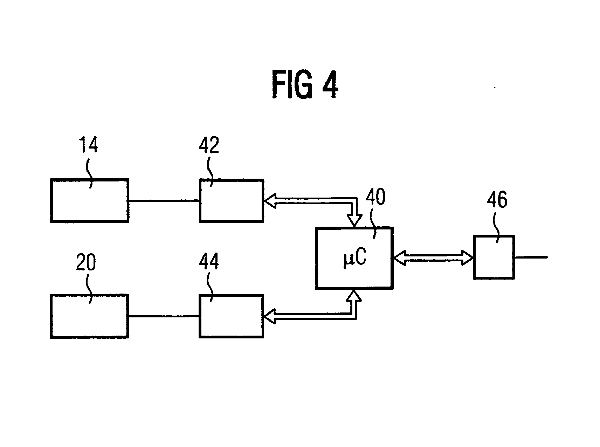

Gemäß Fig. 1 befindet sich im Bereich über der Windschutzscheibe 2 eines Kraftfahrzeugs eine Sende-/Empfangseinrichtung 4, mittels der Segmente von Ebenen bestrahlbar bzw. Lichtvorhänge 6a, 6b, 6c erzeugbar sind, die sich quer zur Fahrzeuglängsrichtung erstrecken und ausgehend von der Sende-/Empfangseinheit 4 unterschiedlich geneigt sind. Die Lichtvorhänge 6a, 6b und 6c sind in Fig. 4 nach unten verkürzt dargestellt; es versteht sich, daß sich die Lichtvorhänge bis in den Fußraum des Fahrzeugs erstrecken. Die einzelnen Lichtvorhänge sind so angeordnet, daß ein Bereich zwischen dem nicht dargestellten Beifahrersitz und einer in der Schalttafel 8 vorgesehenen Airbag-Austrittsklappe 10 und/oder ein Raum zwischen dem Lenkrad 12, in dem ein Airbag angeordnet ist, und dem Fahrersitz überdeckt wird.

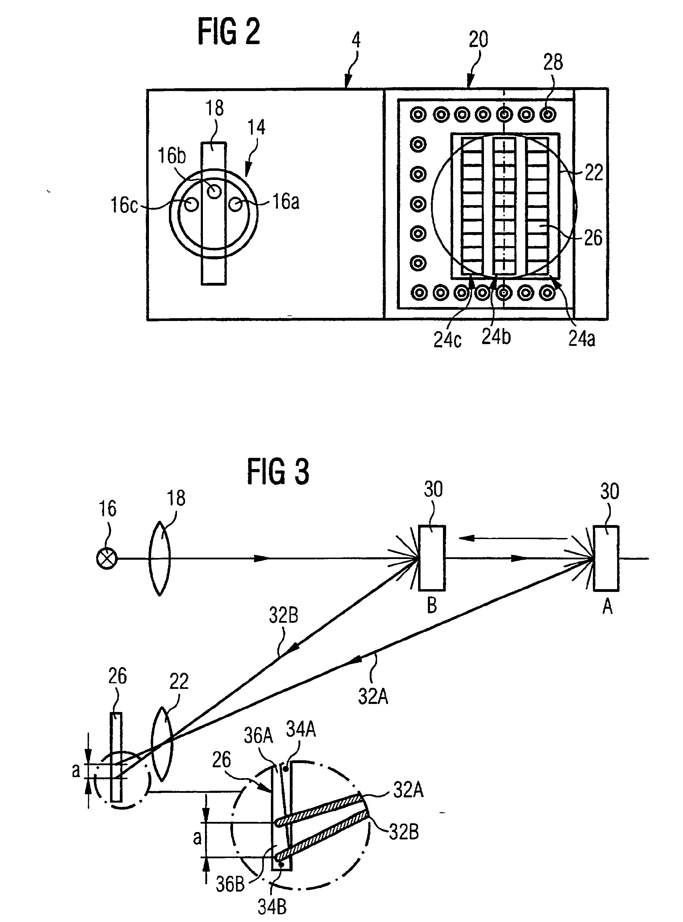

Fig. 2 zeigt eine Untenansicht auf die Sende-/Empfangseinheit 4.

Im dargestellten Beispiel enthält die Sende-/Empfangseinheit 4 als Sendeeinrichtung 14 eine Anordnung aus in Fahrzeuglängsrichtung beabstandeten Lichtquellen 16a, 16b und 16c, die beispielsweise als Laserdioden ausgebildet sind und denen eine gemeinsame Linien- bzw. Ebenenlinse 18 zugeordnet ist, durch die hindurch die Lichtquellen ihr Licht abstrahlen. Die Linse 18 ist derart ausgebildet, daß beispielsweise die Lichtquelle 16a den hintersten Lichtvorhang und die Lichtquelle 16c den vordersten Lichtvorhang erzeugt.

Die in der Sende-/Empfangseinheit 4 enthaltene Empfangseinrichtung 20 enthält eine Empfängerlinse 22, durch die hindurch das von einem Objekt im Fahrzeuginnenraum, das von den Lichtvorhängen getroffen wird, reflektiertes oder gestreutes bzw. ausgesandtes Licht auf drei Reihen 24a, 24b und 24c von Sensorelementen 26 fällt, die jeweils einem Lichtvorhang zugeordnet sind.

Dabei sind beispielsweise die Sensorelemente 26 der Reihe 24c, die dem vordersten Lichtvorhang 6c entspricht, in fünf Gruppen unterteilt, wobei jede Gruppe in einer nicht im einzelnen dargestellten Auswerteeinheit getrennt ausgewertet werden kann, um im Bereich des vordersten Lichtvorhangs 6c, der einen "roten" Bereich bildet, in dem sich bei zulässiger Airbag-Auslösung kein Objekt oder nur ein nicht relevantes Objekt befinden darf, gezielt ausgewertet werden kann. Ein nicht relevantes Objekt ist beispielsweise ein Objekt, das sich in sehr kurzem Abstand von der Einheit 4 befindet und damit von der Auslösung des Airbags nicht betroffen ist, beispielsweise eine Hand, oder ein Objekt, das sich sehr tief im Passagierraum befindet, beispielsweise die Beine des Fahrers oder Beifahrers. Die dem mittleren Lichtvorhang 6b zugeordnete Reihe 24b ist beispielsweise in drei Gruppen unterteilt, so daß im Bereich dieses Lichtvorhangs eine nicht ganz so genaue Auswertung erfolgt wie im gefährlichsten Bereich des vordersten Lichtvorhangs 6c. Die gruppenweise Zusammenfassung der Sensorelemente ist nicht zwingend. Sie kann im Hinblick auf die erforderliche Genauigkeit der Objekterkennung und die verfügbare Rechenzeit bzw. Rechenkapazität erfolgen, wobei die Ausgangssugnale der zu einer Gruppe zusammengefaßten Sensorelemente addiert und summarisch ausgewertet werden können.

Mit 28 sind in Fig. 2 Anschlußstifte zum Anschließen der Sensorelemente dargestellt.

Anhand der Fig. 3 werden im Folgenden der Aufbau und die Funktionsweise der in dem System vorteilhafterweise eingesetzten Sensorelemente 26 erläutert. Es sei angenommen, in einem der Lichtvorhänge befinde sich ein Objekt 30 in einer Position B. Von der Lichtquelle 16 durch die Linse 18 hindurch abgestrahltes Licht trifft auf die Oberfläche des Objektes 30, dessen Oberfläche dadurch zu einem Strahler wird und einen Lichtstrahl 32B aussendet, der durch die Linse 22 hindurch auf das Sensorelement 26 fällt.

Bewegt sich das Objekt 30 aus der Position B in die Position A, so sendet es von dort den Lichtstrahl 32A aus, der gemäß Fig. 3 an einer von der Auftreffstelle des Lichtstrahls 32B um die Strecke a entfernten Stelle auftrifft.

Wie aus dem Einschub der Fig. 3, der das Sensorelement 26 detailliert darstellt, unmittelbar ersichtlich ist, enthält das Sensorelement 26 zwei Lichtsensoren 34B und 34A, deren Lichtempfindlichkeiten räumlich etwa den Dreiecksbereichen 36A und 36B entsprechen.

Der Lichtsensor 34A empfängt relativ zum Lichtsensor 34B um so mehr Licht, je weiter sich das Objekt 30 von der Linse 18 oder 22 bzw. der Sende-/Empfangseinheit 4 entfernt befindet. Der Lichtsensor 34A könnte somit als Fernsensor und der Lichtsensor 34B könnte als Nahsensor bezeichnet werden. Das Verhältnis der auf die Lichtsensoren 34A und 34B eines Sensorelements 26 fallenden Lichtmengen ist somit ein Maß für den Abstand des Objekts 30 von der Sende-/Empfangseinheit 4. Das jeweils bestrahlte Sensorelement 26 der jeweiligen Reihe 24 gibt den Winkel der strahlenden Objektstelle in den jeweiligen Lichtvorhang an. Somit kann durch Auswertung der Ausgangssignale aller Lichtsensoren 34 die Lage der Objektoberfläche relativ zu der Sende-/Empfangseinheit 4 und damit innerhalb des Fahrzeuginnenraums ermittelt werden.

Fig. 4 zeigt ein Blockschaltbild zur Steuerung des beschriebenen Systems:

Eine Steuereinrichtung 40 mit einem Mikroprozessor und zugehörigen Speichereinrichtungen steuert über eine geeignete Schnittstelleneinheit 42 den Betrieb der Lichtquellen 60a, b und c der Sendeeinrichtung 14. Die Empfangseinrichtung 20 bzw. deren Sensorelemente 26 sind über eine Schnittstelleneinheit 44 mit der Steuereinrichtung 40 verbunden. Die Steuereinrichtung 40 enthält vorteilhafterweise alle Steuerprogramme und -algorithmen zum Auswerten der Ausgangssignale der Empfangseinrichtung 20 und zum Ansteuern der Sendeeinrichtung 40. An die Steuereinrichtung 40 ist eine weitere Schnittstelleneinheit 46 angeschlossen, über der einem nicht dargestellten Steuergerät zum Auslösen eines Airbags Informationen über ein im Bereich der Lichtvorhänge festgestelltes Objekt zugeleitet werden, die ggf. eine Auslösung des Airbags verhindern, verzögern oder in ihrer Geschwindigkeit beeinflussen.

Der Aufbau und die Funktionen der einzelnen Bausteine und deren grundsätzliches Zusammenwirken sind an sich bekannt und werden daher nicht erläutert.

Im Folgenden wird das erfindungsgemäße Zusammenwirken beispielsweise erläutert:

Die vorzugsweise als im Infrarotbereich strahlende Laserdioden ausgebildeten Lichtquellen 16a, b und c werden vorteilhafterweise intermittierend zyklisch angesteuert. In zeitlicher Korrelation dazu werden jeweils die entsprechenden Sensorelement-Reihen 24a, b und c abgefragt.
a) In einem ersten Prüfschritt wird überprüft, ob die Ausgangssignale aller Sensoren 34A und 34B zwischen einem vorgegebenen LOW- und HIGH-Power-Limit liegen. Falls ein Ausgangssignal außerhalb des vorbestimmten Bereiches liegt, wird
b) in einem nächsten Schritt die Sendeleistung der zugehörigen Lichtquelle(n) um einen vorbestimmten Betrag in einer Richtung verändert, die das Ausgangssignal in den vorbestimmten Bereich bringt. Dieser Vorgang wird in einem Schritt
c) maximal K-mal wiederholt. Falls er erfolglos bleibt, d.h. sich das Ausgangssignal nicht derart verändert, daß es in dem vorbestimmten Bereich liegt, wird der jeweilige Sensor als ungültig markiert.

Mit dem vorbeschriebenen Vorgang wird die Funktionstüchtigkeit der Sensoren und der Lichtquellen überprüft, das System in einen Betriebsbereich guter Empfindlichkeit gebracht, bewirkt, daß nicht mit unnötig hoher Leistung gearbeitet wird, die für einen Fahrzeuginsassen unzuträglich sein kann, und werden defekte Sensoren erkannt und von der Auswertung ausgeschlossen.

In einem Schritt d) wird dann durch Überprüfung der Verhältnisse der Ausgangssignale der Sensoren 34A und 34B eines Sensorelements 26 überprüft, ob sich ein Objekt zu nah oder zu weit entfernt von einem Sensor befindet. Dies könnte auf einen Defekt in dem jeweiligen Sensorelement hindeuten oder ein Objekt anzeigen, das bezüglich der Auslösung des Airbags unkritisch ist. Wenn die Sensoren eines Sensorelements das Vorhandensein eines Objekts außerhalb eines vorbestimmten Abstandsbereichs anzeigen, wird das jeweilige Sensorelement als ungültig markiert bzw. von der weiteren Auswertung ausgeschlossen.

In einem nachfolgenden Arbeitsschritt d) werden dann die Ausgangssignale aller gültigen Sensoren bzw. Sensorelemente ausgewertet, um zunächst in jeden der Lichtvorhänge ein Entfernungsprofil des erfaßten Objekts festzustellen und dann ggf. die einzelnen Entfernungsprofile zu einem gesamten Oberflächenprofil zusammenzufassen.

In einem weiteren Schritt f) wird dann ermittelt, ob sich das Objekt innerhalb eines vorgegebenen kritischen Bereiches befindet. Wenn dies nicht der Fall ist, beginnt ein neuer Meß-und Auswertezyklus. Andernfalls wird in einem Schritt e) überprüft, ob das Objektprofil einem von mehreren gespeicherten Profilen ganz oder weitgehend entspricht. Falls dies der Fall ist, erzeugt die Steuereinrichtung 40 ein entsprechendes Ausgangssignal zur Steuerung der Airbag-Einheit.

Die an das Airbag-System übersandte Steuerinformation kann sehr differenziert sein; wenn beispielsweise in bestimmten Bereichen oder insgesamt im Bereich des Lichtvorhangs 6c innerhalb vorbestimmter Entfernungen ein Objekt festgestellt wird, kann dies dazu führen, daß die Auslösung eines Airbags völlig unterbunden wird. Das Vorhandensein eines Objekts in bestimmten Bereichen des Lichtvorhangs 6b kann dazu führen, daß der Airbag mit verminderter Aufblasgeschwindigkeit ausgelöst wird. Ein Objekt im Lichtvorhang 6a kann bewirken, daß der Airbag mit maximaler Kraft ausgelöst wird, usw.

Nach Erzeugen eines Steuersignals für das Airbag-System beginnt ein neuer Meß- und Auswertezyklus.

Das beschriebene System und der beschriebene Meß- und Auswertezyklus können in vielfältiger Weise abgeändert werden.

Das System kann N-Lichtvorhänge bzw. Lichtquellen enthalten, wobei jedem Lichtvorhang M N-Sensorelemente zugeordnet sind. Die Sensorelemente 24 müssen nicht als jeweils mit zwei Sensoren ausgestattete Sensorelemente ausgebildet sein. Die Bestimmung der Position eines Objektes innerhalb des von der Sendeeinrichtung überstrahlten Bereiches kann mittels üblicher Triangulationsverfahren oder Laufzeitverfahren durchgeführt werden, wobei nicht zwingend mit Infrarotstrahlung gearbeitet werden muß. Bei einem Laufzeitverfahren ist der Arbeitsschritt d) der Einzelüberprüfung eines Sensorelementes weiterhin möglich, wobei die Laufzeit, die ein Meßstrahl von seiner Quelle über die Reflexion am Objekt bis zum Sensor benötigt, innerhalb eines vorbestimmten Bereiches liegen muß.

Bei Sensoren, die nur in einem engen Raumwinkelbereich empfindlich sind und deren Ausgangssignal keine unmittelbare Abstandsinformation enthält, ist eine direkte Einzelauswertung hinsichtlich des Objektabstandes nicht möglich. Hier kann indirekt auf die Intaktheit des Sensors geschlossen werden, indem sein Ausgangssignal zusammen mit den Ausgangssignalen weiterer Sensoren ausgewertet werden, die derart angeordnet und ausgebildet sind, daß eine Redundanz der Auswertung gegeben ist.

## Patentansprüche

1. System zum Steuern der Auslösung eines Insassenschutzmittels, insbesondere eines Airbags, in Abhängigkeit von der Belegung eines dem Insassenschutzmittel zugeordneten Raums, enthaltend
eine Sensoreinrichtung (14) zum Senden von Strahlung in den Raum,
eine Empfangseinrichtung (20) mit einer Mehrzahl von Sensorelementen (26) zur Erfassung von von einem in dem Raum befindlichen Objekt (30) zurückgeworfener Strahlung,
und einer an die Empfangseinrichtung angeschlossene Steuereinrichtung (40) zum Ermitteln der Position des Objektes innerhalb des Raumes, zur Steuerung der Sendeleistung der Sendeeinrichtung in Abhängigkeit von der von wenigstens einem Sensorelement aufgenommenen Strahlungsleistung und zum Erzeugen eines von der ermittelten Position abhängigen Positionssignals zur Beeinflussung der Auslösung des Insassenschutzmittels,
wobei die Ausgangssignale der Sensorelemente (26) einzeln hinsichtlich der Erfüllung vorgegebener Bedingungen ausgewertet werden und bei Nichterfüllung der vorgegebenen Bedingungen für die Positionsermittlung nicht berücksichtigt werden.

2. System nach Anspruch 1, wobei bei Unterschreiben eines vorbestimmten Minimalwertes oder bei Überschreiten eines vorbestimmten Maximalwertes durch die Ausgangssignale eines Sensorelements die Strahlungsleistung der Sendeeinrichtung (14) im Sinne einer Verminderung des Unter- oder Überschreitens verändert wird und die Auswertung des Sensorelements unterdrückt wird, wenn seine Ausgangssignale Nach einer vorbestimmten Änderung der Strahlungsleistung nicht zwischen dem Minimal- und Maximalwert liegen.

3. System nach Anspruch 1 oder 2, wobei die Auswertung eines Sensorelements (26), dessen Ausgangssignal einen Abstand des Objektes (30) außerhalb eines vorbestimmten Bereiches andeutet, unterdrückt wird.

4. System nach Anspruch 1 bis 3, wobei die Sensorelemente (26) jeweils wenigstens jeweils zwei sich überdeckende, räumliche Empfindlichkeitsbereiche aufweisen, wobei ein Nahsensor (34B) zunehmend und ein Fernsensor (34A) abnehmend mit Strahlung beaufschlagt wird, wenn sich ein erfaßter, strahlungsemittierender Objektpunkt dem Sensorelement nähert.

5. System nach Anspruch 3 und 4, wobei der Abstand eines strahlungsemittierenden Objektpunktes durch das Verhältnis zwischen dem Ausgangssignal des Nahsensors (34B) und dem Ausgangssignal des Fernsensors (34A) ermittelt wird.

6. System nach einem der Ansprüche 1 bis 5, **dadurch gekennzeichnet, daß** ein Meßzyklus und Auswertezyklus folgende Schritte umfaßt:
a) Überprüfung, ob das Ausgangssignal eines Sensors (34A, 34B) innerhalb eines vorbestimmten Bereiches liegt;
b) falls nicht, Veränderung der Sendeleistung der Sendeeinrichtung (14) um einen vorbestimmten Betrag in Richtung der Veränderung des Ausgangssignals zum Erreichen des vorbestimmten Bereiches;
c) Wiederholen von a) und b), bis das Ausgangssignal innerhalb einer vorbestimmten Anzahl von Wiederholungen innerhalb des vorbestimmten Bereiches, falls vorbestimmter Bereich nicht erreicht: Markieren des Sensors ungültig;
d) Überprüfen, ob sich ein Objektpunkt außerhalb eines vorbestimmten Abstandsbereiches von einem Sensor befindet; falls ja: Markieren des Sensors als ungültig;
e) Ermitteln der Objektposition aus den Ausgangsignale der gültigen Sensoren;
f) Überprüfen, ob sich das Objekt innerhalb eines vorgegebenen kritischen Bereiches befindet; falls nein: Springen zu a);
g) Überprüfen, ob das Objektprofil einem gespeicherten Profil entspricht; falls ja, Erzeugen eines Steuersignals für das Insassenschutzmittel;
h) Neubeginn mit a).

7. System nach Anspruch 6, **dadurch gekennzeichnet, daß** die Sendeeinrichtung 714) im Raum liegende Ebenen bestrahlt und daß die Sensorelemente in den Ebenen zugeordneten Reihen (24a, b, c) angeordnet sind.

## Claims

1. System for controlling the triggering of a means of vehicle occupant protection, in particular an airbag, depending on the occupancy of a space associated with the means of vehicle occupant protection, containing
a sensor facility (14) for sending radiation into the space,
a receive facility (20) with a plurality of sensor elements (26) for detecting radiation reflected back by an object (30) situated in the space,
and a control facility (40) connected to the receive facility for determining the position of the object within the space, for controlling the send power level of the send facility depending on the radiation power level recorded by at least one sensor element and for generating a position signal depending on the determined position in order to influence the triggering of the means of vehicle occupant protection,
whereby the output signals from the sensor elements (26) are evaluated individually in respect of meeting predefined conditions and, if the predefined conditions for the positional determination are not met, are not taken into consideration.

2. System according to Claim 1, whereby if a predetermined minimum value is not reached or if a predetermined maximum value is exceeded by the output signals of a sensor element the radiation power level of the send facility (14) is changed with a view to reducing the non-compliance with the minimum or maximum value, and the evaluation of the sensor element is suppressed if its output signals do not lie between the minimum value and maximum value following a predetermined change in the radiation power level.

3. System according to Claim 1 or 2, whereby the evaluation of a sensor element (26), whose output signal indicates that the object (30) is at a distance outside a predetermined range, is suppressed.

4. System according to Claims 1 to 3, whereby the sensor elements (26) each have at least two overlapping spatial sensitivity areas in each case, whereby a close-up sensor (34B) receives more light radiation and a distant sensor (34A) receives less light radiation if a detected object point which is emitting radiation approaches the sensor element.

5. System according to Claims 3 and 4, whereby the distance of a radiation-emitting object point is determined by the relationship between the output signal from the close-up sensor (34B) and the output signal from the distant sensor (34A) .

6. System according to one of Claims 1 to 5, **characterised in that** a measurement cycle and evaluation cycle comprises the following steps:
a) check whether the output signal from a sensor (34A, 34B) lies within a predetermined range;
b) if not, change the send power level of the send facility (14) by a predetermined amount in the direction of change of the output signal in order to reach the predetermined range;
c) repeat a) and b) until the output signal within a predetermined number of repeats lies within the predetermined range, if the predetermined range is not reached: mark the sensor as invalid;
d) check whether an object point is located outside a predetermined distance range from a sensor; if it is: mark the sensor as invalid;
e) determine the object position from the output signals from the valid sensors;
f) check whether the object is situated within a predefined critical area; if not: go to a);
g) check whether the object profile matches a stored profile; if it does: generate a control signal for the means of vehicle occupant protection;
h) start again with a).

7. System according to Claim 6, **characterised in that** the send facility (14) irradiates planes lying in the space and that the sensor elements are arranged in rows (24a, b, c) assigned to the planes.

## Revendications

1. Système pour commander le déclenchement d'un moyen de protection des occupants, en particulier d'un coussin gonflable de sécurité, en fonction de l'occupation d'un espace attribué au moyen de protection des occupants, comprenant
un dispositif capteur (14) destiné à émettre un rayonnement dans cet espace,
un dispositif récepteur (20) comprenant une pluralité d'éléments capteurs (26) destinés à détecter un rayonnement renvoyé par un objet (30) qui se trouve dans l'espace,
et un dispositif de commande (40) connecté au dispositif récepteur et destiné à déterminer la position de l'objet à l'intérieur de l'espace, à commander la puissance d'émission du dispositif émetteur en fonction de la puissance de rayonnement reçue par l'au moins un élément capteur et à produire un signal de position qui dépend de la position déterminée pour influencer le déclenchement du moyen de protection des occupants,
dans lequel les signaux de sortie des éléments capteurs (26) sont analysés individuellement sous le rapport du respect de conditions prédéterminées et qui, s'ils ne respectent pas les conditions prédéterminées ne sont pas pris en compte pour la détermination de position.

2. Système selon la revendication 1, dans lequel, lorsque les signaux de sortie d'un élément capteur deviennent inférieurs à une valeur minimale prédéterminée ou supérieurs à une valeur maximale prédéterminée, la puissance d'émission du dispositif émetteur (14) est modifiée dans le sens tendant à réduire le dépassement vers le bas ou vers le haut, et l'analyse de l'élément capteur est interrompue si ses signaux de sortie ne se trouvent pas entre la valeur minimale et la valeur maximale après une modification prédéterminée de la puissance de rayonnement.

3. Système selon la revendication 1 ou 2, dans lequel l'analyse d'un élément capteur (26) dont le signal de sortie indique une distance de l'objet (30) située en dehors d'un intervalle prédéterminé est interrompue.

4. Système selon les revendications 1 à 3, dans lequel les éléments capteurs (26) présentent à chaque fois au moins deux intervalles de sensibilité tridimensionnelle qui se chevauchent, où un capteur de près (34B) est de plus en plus, et un capteur de loin (34A) de moins en moins, attaqué par le rayonnement lorsqu'un point objet détecté, qui émet un rayonnement, se rapproche de l'élément capteur.

5. Système selon la revendication 3 ou 4, dans lequel la distance d'un point objet émettant un rayonnement est déterminée par le rapport entre le signal de sortie du capteur de près (34B) et le signal de sortie du capteur de loin (34A).

6. Système selon une des revendications 1 à 5, **caractérisé en ce qu'**un cycle de mesure et un cycle d'analyse comprennent les étapes suivantes :
a) vérifier que le signal de sortie d'un capteur (34A, 34B) se trouve à l'intérieur d'un intervalle prédéterminé ;
b) dans la négative, modifier la puissance d'émission du dispositif émetteur (14) d'une valeur prédéterminée dans le sens tendant à modifier le signal de sortie pour atteindre l'intervalle prédéterminé ;
c) répéter a) et b) jusqu'à ce que le signal de sortie se trouve à l'intérieur d'un nombre prédéterminé de répétitions dans les limites de l'intervalle prédéterminé si l'intervalle prédéterminé n'a pas été atteint ; marquer le capteur comme invalide ;
d) vérifier si un point objet se trouve à l'extérieur d'un intervalle de distance prédéterminé par rapport à un capteur ; dans l'affirmative : marquer le capteur comme invalide ;
e) déterminer la positon de l'objet à partir des signaux de sortie des capteurs valides ;
f) vérifier si l'objet se trouve à l'intérieur d'un intervalle critique prédéterminé ; dans la négative : sauter à a) ;
g) vérifier si le profil de l'objet correspond à un profil mémorisé ; dans l'affirmative, produire un signal de commande pour le moyen de protection des occupants ;
h) recommencer par a).

7. Système selon la revendication 6, **caractérisé en ce que** le dispositif émetteur (14) irradie des plans situés dans l'espace et **en ce que** les éléments capteurs sont disposés en rangées (24a, b, c) associées aux plans.
